(19)

Europäisches Patentamt

European Patent Office

Office européen des brevets

(11) **EP 4 458 912 A1**

(12) **EUROPEAN PATENT APPLICATION**

(43) Date of publication:
**06.11.2024   Bulletin 2024/45**

(21) Application number: **23170899.1**

(22) Date of filing: **01.05.2023**

(51) International Patent Classification (IPC):
**C09D 5/00** $^{(2006.01)}$         **C08K 3/40** $^{(2006.01)}$
**C09D 7/61** $^{(2018.01)}$         **C09D 7/40** $^{(2018.01)}$
**C09D 17/00** $^{(2006.01)}$         **C08K 7/20** $^{(2006.01)}$
**C09D 5/03** $^{(2006.01)}$

(52) Cooperative Patent Classification (CPC):
**C09D 5/004; C08K 3/40; C08K 7/20; C09D 5/031;
C09D 5/032; C09D 5/033; C09D 7/61; C09D 7/69;
C09D 7/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ink Invent IP B.V.**
**3433 PT Nieuwegein (NL)**

(72) Inventors:
• **Knoote, Jacques Arthur**
  **2717 DG Zoetermeer (NL)**

• **Mijnen, Paul Willem**
  **3566 MG Utrecht (NL)**
• **Kerres, Harald Paul**
  **2717 DG Zoetermeer (NL)**
• **Schlijper, Ramon**
  **2613 CH Delft (NL)**
• **Knoote, Menno**
  **2511 CD Den Haag (NL)**

(74) Representative: **van Someren, Petronella F. H. M.
et al
Arnold & Siedsma
Bezuidenhoutseweg 57
2594 AC The Hague (NL)**

(54) **RETROREFLECTIVE POWDER COATING COMPOSITION**

(57)   The present invention concerns a retroreflective powder coating composition consisting of:
• 10 - 95.9 wt.% of a film-forming binder material;
• 4 - 85 wt.% of spherical glass beads having a median particle diameter D50 between 1 and 50 $\mu$m and a refractive index between 1.9 and 2.8;
• 0.1 - 15 wt.% of pigment flakes having a median diameter between 1 and 75 $\mu$m; and
• 0 - 15 wt.% of one or more further ingredients,

wherein the weight percentages are based on the total weight of the composition,
wherein the composition comprises particles comprising the film-forming binder material and having a median particle diameter D50 between 2 and 200 $\mu$m, and
wherein the median diameter of said pigment flakes is greater than 35% of the median particle diameter D50 of said spherical glass beads.

The invention further concerns a powder coating process for providing a substrate with retroreflective properties and a substrate coated with a retroreflective layer obtainable by said process.

**EP 4 458 912 A1**

**Description**

**FIELD OF THE INVENTION**

The invention relates to a retroreflective powder coating composition, to a powder coating process for providing a substrate with retroreflective properties using said retroreflective powder coating composition and to a substrate coated with a retroreflective layer obtainable by said process.

**BACKGROUND OF THE INVENTION**

Retroreflective effects are used in a variety of applications. For example, to improve the visibility of road signs, road markers, textiles, vehicles, et cetera, under dark conditions, or simply to improve their visual appearance. Retroreflection occurs by the tandem action of refraction of the incident light through the upper surface of for example a spherical glass bead, internal reflection from the lower onside surface of the spherical glass bead and subsequent refraction of the light as it exits the upper surface of the spherical glass bead, travelling back to the direction from which the impinging light came.

Vehicles, such as cars, bikes, motorcycles and scooters, are typically provided with a clearcoat top layer to protect them, for example against oxidation or weathering, and to provide the overall coating with a glossy appearance. This glossy clearcoat top layer may be appealing from an aesthetic point of view but it may deteriorate retroreflective properties and the detectability of the vehicle using Light Detection and Ranging (LIDAR) technology.

Coatings with retroreflective properties are for example known from WO2022/243231A1.

US6,623,793B2 concerns a process for providing a substrate with a retroreflective surface, said process comprising the steps of applying a powder coating composition not comprising retroreflective material to the substrate, partially curing the powder coating composition, applying a retroreflective layer onto the surface of the partially cured powder coating composition, e.g. microspheres having a refractive index of 1.9, finish curing the powder coating and optionally applying a clearcoat onto the retroreflective layer.

WO2021/216518A1 concerns retroreflective powder coating compositions comprising a binder comprising a film-forming resin and a plurality of particles, wherein at least a portion of the particles is at least partially coated with a metallic material. The powder coating compositions described in the working examples of WO2021/216518A1 all comprise hemispherically aluminium coated (HAC) glass microspheres (Prizmalite P2453BTA, New York, NY, with or without a further alkyl trialkoxysilane coating). It is described in WO2021/216518A1 that as a result of the further alkyl trialkoxysilane coating, the glass microspheres migrate to the surface of the coating layer, such that a greater concentration of the glass microspheres can be found in the surface region. Prizmalite P2453BTA concerns hemispherically aluminum coated barium titanate glass microspheres with an average diameter of 40 to 50 μm and a refraction index of 1.93. In the working examples of WO2021/216518A1, coatings with a thickness of between 64 to 114 μm were applied on aluminium panels. The panels coated with retroreflective powder coating compositions comprising Prizmalite P2453BTA with a further alkyl trialkoxysilane coating had a much higher coefficient of retroreflection than corresponding compositions comprising Prizmalite P2453BTA without this further alkyl trialkoxysilane coating.

It is described in the *Guidelines for using Prizmalite® P2453BTA retro reflective spheres,* distributed by Cospheric LLC, that *"The aluminium coating on half the barium titanate spheres provides the mechanism for retroreflectivity. The light passes through the clear half of the sphere and "bounces" off the aluminum coating. The combination of barium titanate's RI of 1.9 and the hemispheric coating of aluminum creates retroreflectivity and accounts for the more intense and direct light refraction achieved."* It is further described in these guidelines that *"these coatings have been designed to promote the migration of the microspheres to the surface of the inks or coatings in which they are incorporated. The concept of retroreflection depends on the passage of the light through the clear, uncoated hemisphere of the glass sphere. If the sphere is not physically situated for light to pass through it, no retro reflectivity can result. Prizmalite's coatings create a tension between the coating and its surrounding resin that forces the sphere to "pop up" to the surface, thus maximizing its potential exposure to light. Coating the spheres enhances the retro reflective effect by achieving this placement and reduces the amount of spheres required because the coated spheres perform so much more efficiently than uncoated ones."*

The present inventors have found that using spherical glass beads with a refractive index of about 1.9 or lower does not provide coated substrates with sufficient retroreflective properties if the spherical glass beads do not protrude from the coating, for example if the spherical glass beads are fully embedded in the coating and/or are covered with a clearcoat top layer.

It was found that using a hemispheric aluminium layer on the spherical glass beads with a refractive index of 1.9 in coatings wherein the spherical glass beads do not protrude from the coating worsens the retroreflective properties.

It is an object of the invention to provide coatings obtained from powder coating compositions with improved retroreflective properties and/or improved LIDAR-detectability.

It is a further object of the invention to provide coatings obtained from powder coating compositions with improved retroreflective properties and/or improved LIDAR-detectability, wherein the coatings comprise retroreflective spherical glass beads that do not protrude from the plastic matrix, wherein the spherical glass beads are for example fully embedded in the coating and/or are covered with a clearcoat top layer.

It is another object of the invention to provide coatings obtained from powder coating compositions with smooth, glossy or semi-glossy retroreflective surfaces and/or smooth, glossy or semi-glossy LIDAR-detectable surfaces.

## SUMMARY OF THE INVENTION

The inventors have unexpectedly established that, in order to provide sufficient retroreflection, spherical glass beads do not necessarily need to protrude from the polymer coating layer if spherical glass beads with a higher refractive index are combined with pigment flakes and if the median diameter of said pigment flakes is greater than 35% of the median particle diameter D50 of said spherical glass beads.

The inventors have further found that applying a hemispheric light-reflective coating onto the spherical glass beads has an adverse effect on retroreflection/LIDAR-detectability if the spherical glass beads do not protrude from the coating layer.

Accordingly, in a first aspect the invention provides a retroreflective powder coating composition consisting of:

- 10 - 95.9 wt.% of a film-forming binder material chosen from the group consisting of thermoplastic polymers, thermoset prepolymer compositions, actinic-radiation curable resin compositions and combinations thereof;
- 4 - 85 wt.% of spherical glass beads, wherein said spherical glass beads have a median particle diameter D50, as measured with laser diffraction, between 1 and 50 $\mu$m, and a refractive index, measured at a wavelength $\lambda$ of 589 nm, between 1.9 and 2.8, wherein the spherical glass beads are not hemispherically coated with a light-reflective coating;
- 0.1 - 15 wt.% of pigment flakes chosen from the group consisting of metallic pigment flakes, pearlescent pigment flakes or a combination thereof, said pigment flakes having a median diameter, as measured with laser diffraction, between 1 and 75 $\mu$m, wherein said pigment flakes preferably have a thickness smaller than 1 $\mu$m and an aspect ratio (flake diameter/thickness) of at least 10; and
- 0 - 15 wt.% of one or more further ingredients,

wherein the weight percentages are based on the total weight of the composition,
wherein the composition comprises particles comprising the film-forming binder material and having a median particle diameter D50, as measured with laser diffraction, between 2 and 200 $\mu$m, and
wherein the median diameter of said pigment flakes is greater than 35% of the median particle diameter D50 of said spherical glass beads.

In a second aspect, a powder coating process for providing a substrate with retroreflective properties is provided, said process comprising the steps of:

(a) providing a retroreflective powder coating composition according to the first aspect and a substrate;
(b) applying the retroreflective powder coating composition onto the substrate;
(c) fixing the retroreflective powder coating composition onto the substrate to provide a retroreflective layer; and
(d) optionally applying a clearcoat top layer or a tinted a clearcoat top layer onto the retroreflective layer obtained in step (c).

The inventors have unexpectedly established that application of a clearcoat top layer on top of the retroreflective layer obtained in step (c) does not or hardly affect the retroreflective properties and/or LIDAR-detectability of the coated substrate.

In a third aspect, the invention provides a substrate coated with a retroreflective layer obtained by or obtainable by the process according to the second aspect.

## DEFINITIONS

The term '*pigment*' as used herein refers to particulate colorants, such as spherical parts or flakes. They are insoluble in the binder or solvent used.

The term '*dye*' as used herein refers to colorants that can be molecularly dissolved in the binder or solvent used.

The term '*colorant*' as used herein includes pigments as well as dyes.

The term '*titanium suboxides*' as used herein refers to titanium oxide compound with the formula $Ti_nO_{2n-1}$,

wherein n is an integer greater than 1.

The term '*LIDAR*' is an acronym of '*light detection and ranging*' or '*laser imaging, detection, and ranging*' and concerns a method for determining ranges (variable distance) to an object, speed of an object and 3D-representations of an object by targeting the object with electromagnetic radiation, typically laser light, and measuring the time for the reflected electromagnetic radiation to return to a receiver.

The term '*vehicle*' as used herein refers to a physical object used suitable for transporting people or goods. Non-limiting examples of vehicles in the context of this invention are chosen from the group consisting of cars, lorries, trucks, bikes, mopeds, scooters, motorcycles, trains, trams, boats, ships, drones, skateboards, missiles, helicopters and aircrafts. In a preferred embodiment, the vehicle is chosen from cars, lorries, trucks, bikes, mopeds, scooters and motorcycles.

## DETAILED DESCRIPTION

### Retroreflective powder coating composition

A first aspect of the invention concerns a retroreflective powder coating composition consisting of:

- 10 - 95.9 wt.% of a film-forming binder material chosen from the group consisting of thermoplastic polymers, thermoset prepolymer compositions, actinic-radiation curable resin compositions and combinations thereof;
- 4 - 85 wt.% of spherical glass beads, wherein said spherical glass beads have a median particle diameter D50, as measured with laser diffraction, between 1 and 50 $\mu$m, and a refractive index, measured at a wavelength $\lambda$ of 589 nm, between 1.9 and 2.8, wherein the spherical glass beads are not hemispherically coated with a light-reflective coating;
- 0.1 - 15 wt.% of pigment flakes chosen from the group consisting of metallic pigment flakes, pearlescent pigment flakes or a combination thereof, said pigment flakes having a median diameter, as measured with laser diffraction, between 1 and 75 $\mu$m, wherein said pigment flakes preferably have a thickness smaller than 1 $\mu$m and an aspect ratio (flake diameter/thickness) of at least 10; and
- 0 - 15 wt.% of one or more further ingredients,

wherein the weight percentages are based on the total weight of the composition,
wherein the composition comprises particles comprising the film-forming binder material and having a median particle diameter D50, as measured with laser diffraction, between 2 and 200 $\mu$m, and
wherein the median diameter of said pigment flakes is greater than 35% of the median particle diameter D50 of said spherical glass beads.

As will be appreciated by those skilled in the art, the wording '*the retroreflective powder coating composition consists of*' means that the combined amounts of film-forming binder material, spherical glass beads, pigment flakes and further ingredients add up to 100 wt.% of the retroreflective powder coating composition.

In a preferred embodiment, the particles comprising the film-forming binder material have a median particle diameter D50, as measured with laser diffraction, between 2.5 and 175 $\mu$m, more preferably between 3 and 150 $\mu$m, even more preferably between 3.5 and 125 $\mu$m, still more preferably between 4 and 100 $\mu$m, such as between 5 and 75 $\mu$m or between 6 and 70 $\mu$m.

In another embodiment, the particles comprising the film-forming binder material have a median particle diameter D50, as measured with laser diffraction, between 2.5 and 200 $\mu$m, such as between 5 and 200 $\mu$m, between 10 and 200 $\mu$m, between 15 and 200 $\mu$m, between 20 and 200 $\mu$m, between 25 and 200 $\mu$m, between 30 and 200 $\mu$m or between 35 and 200 $\mu$m.

In yet another embodiment, the particles comprising the film-forming binder material have a median particle diameter D50, as measured with laser diffraction, between 2 and 175 $\mu$m, such as between 2 and 150 $\mu$m, between 2 and 125 $\mu$m, between 2 and 100 $\mu$m, between 2 and 75 $\mu$m, between 2 and 70 $\mu$m, between 2 and 65 $\mu$m, between 2 and 60 $\mu$m, between 2 and 55 $\mu$m or between 2 and 50 $\mu$m.

The diameters D10 and D90 are often referred to in the art as Dv10 or $D_{v0.1}$ and Dv90 or $D_{v0.9}$, respectively. The D10 diameter is the diameter where 10% of the population lies below. Similarly, the D90 diameter is the diameter where 90% of the population lies below.

The span, as measured by laser diffraction, of the particle size distribution of the particles comprising the film-forming binder is defined by:

$$span = \frac{D90 - D10}{D50}$$

In a preferred embodiment, the particle size distribution of the particles comprising the film-forming binder has a span between 0.05 and 1.9, more preferably between 0.1 and 1.5, even more preferably between 0.15 and 1, still more preferably between 0.2 and 0.8.

In a preferred embodiment, the particles comprising the film-forming binder further comprise at least part of the one or more further ingredients, such as at least 50 wt.%, at least 80 wt.% or 100 wt.% of the one or more further ingredients, based on the total weight of the one or more further ingredients in the retroreflective powder coating composition, wherein the particles comprising the film-forming binder preferably do not comprise the spherical glass beads and the pigment flakes.

In another embodiment, the particles comprising the film-forming binder further comprise the pigment flakes and at least part of the one or more further ingredients, such as at least 50 wt.%, at least 80 wt.% or 100 wt.% of the one or more further ingredients, based on the total weight of the one or more further ingredients in the retroreflective powder coating composition, wherein the particles comprising the film-forming binder preferably do not comprise the spherical glass beads.

In yet another embodiment, the particles comprising the film-forming binder further comprise the pigment flakes, the spherical glass beads and at least part of the one or more further ingredients, such as at least 50 wt.%, at least 80 wt.% or 100 wt.% of the one or more further ingredients, based on the total weight of the one or more further ingredients in the retroreflective powder coating composition.

As will be appreciated by those skilled in the art, if the particles comprising the film-forming binder further comprise for example the pigment flakes and/or the spherical glass beads, the particles comprising the film-forming binder still have the median particle diameter D50 as defined hereinbefore, meaning that the size of the pigment flakes and spherical glass beads should meet this requirement.

### *Film-formins binder material*

The retroreflective powder coating composition comprises 10 - 95.9 wt.%, based on the weight of the retroreflective powder coating composition, of a film-forming binder material chosen from the group consisting of thermoplastic polymers, thermoset prepolymer compositions, actinic-radiation curable resin compositions and combinations thereof. The terms *'thermoplastic polymer', 'thermoset prepolymer composition'* and *'actinic-radiation curable resin composition'* as used herein have the common meaning in the art.

When a thermoplastic polymer composition is exposed to elevated temperature, it begins to melt, flows out and forms a coating on cooling. No chemical crosslinking takes place. In the context of the thermoplastic polymer, the weight percentages of the film-forming binder material as defined herein only concern material that contributes to the thermoplastic polymeric material itself. Any other ingredients (different from the pigment flakes and spherical glass beads) are encompassed by the one or more further ingredients as defined herein.

When a thermoset prepolymer composition is exposed to elevated temperature, it begins to melt, flows out and then chemically reacts to form a higher molecular weight polymer in a network-like structure. Thermoset prepolymer compositions are thus able to chemically crosslink when subjected to elevated temperature. The prepolymer composition should have a sufficiently high molecular weight to melt and flow at a temperature below the curing temperature. In the context of the thermoset prepolymer composition, the weight percentages of the film-forming binder material as defined herein only concern materials that contribute to the polymeric material itself in the final coating. Any other ingredients (different from the pigment flakes and spherical glass beads), such as for example a polymerization catalyst, are encompassed by the one or more further ingredients as defined herein.

When an actinic-radiation curable resin composition is exposed to elevated temperature, it begins to melt, and flows out to form a film layer. Upon subjecting the film layer to actinic radiation, such as for example UV radiation, polymerization and/or chemical crosslinking takes place to form a higher molecular weight polymer. In the context of the actinic-radiation curable resin composition, the weight percentages of the film-forming binder material as defined herein only concern materials that contribute to the polymeric material itself in the final coating. Any other ingredients (different from the pigment flakes and spherical glass beads), such as for example a photoinitiator, are encompassed by the one or more further ingredients as defined herein.

In an embodiment, the retroreflective powder coating composition comprises 10-94 wt.%, based on the weight of the retroreflective powder coating composition, of the film-forming binder material, such as 10 - 92 wt.%, 10 - 90 wt.%, 10 - 85 wt.%, 10 - 80 wt.%, 10 - 75 wt.%, 10 - 70 wt.%, 10 - 65 wt.%, 10 - 60 wt.%, 10 - 55 wt.% or 10 - 50 wt.%.

In another embodiment, the retroreflective powder coating composition comprises 15 - 95.9 wt.%, based on the weight of the retroreflective powder coating composition, of the film-forming binder material, such as 20 - 95.9 wt.%,

25 - 95.9 wt.%, 30 - 95.9 wt.%, 35 - 95.9 wt.%, 40 - 95.9 wt.% or 45 - 95.9 wt.%.

In a preferred embodiment, the film-forming binder material is a thermoset prepolymer composition, preferably a thermoset prepolymer composition chosen from the group consisting of phenol formaldehydes, urea formaldehydes, melamine formaldehydes, epoxies, polyurethanes, unsaturated polyesters, polyesters, acrylics, acrylated acrylics and hybrid polyester resin/epoxy resin systems. Thermoset prepolymer compositions can have functional groups that are reactive with themselves, such that these prepolymers are self-crosslinking. Alternatively, the thermoset prepolymer compositions comprise a prepolymer with first functional groups and a crosslinker with second functional groups that may react with the first functional groups to form chemical bonds.

Non-limiting examples of crosslinkers include phenolic resins, amino resins, epoxy resins, triglycidyl isocyanurate, β-hydroxyalkyl amides, alkylated carbamates, (meth)acrylates, isocyanates, blocked isocyanates, triglycidyl isocyanurates, diglycidyl terephthalate, polyacids, anhydrides, organometallic acid-functional materials, polyamines, polyamides, aminoplasts, carbodiimides, oxazolines, and combinations thereof. For example, the thermoset prepolymer compositions can comprise:

- a carboxylic acid functional polyester prepolymer and an epoxy functional crosslinker;
- a hydroxyl functional polyester prepolymer and a blocked isocyanate crosslinker;
- an acrylic prepolymer based on glycidyl methacrylate copolymers with dodecane dicarboxylic acid as crosslinker; or
- a polyester prepolymer and a crosslinker chosen from the group consisting of a triglycidyl isocyanurate, diglycidyl terephthalate, a β-hydroxyalkyl amide, a glycidyl functional acrylic copolymer or a combination thereof.

In an embodiment, the film-forming binder material is a thermoplastic polymer, more preferably a thermoplastic polymer chosen from the group consisting of homopolymers and copolymers of polyethylene (PE, LDPE, HDPE, LLDPE), polypropylene (PP), polyvinylchloride (PVC), polystyrene (PS), polymethylmethacrylate (PMMA), polyamide (PA), polyoxymethylene (POM), polycarbonate (PC), polyethylene terephthalate (PET), polyethylene terephthalate glycol (PETG), polysulfone (PSU), polyimide (PI), polybutene (PB), polyether ether ketone (PEEK), poly(acrylonitrile butadiene styrene) (ABS), poly(acrylonitrile butadiene acrylate) (ABA), poly(acrylic styrene acrylonitrile) (ASA), poly(lactic acid) (PLA), nylon and blends thereof.

In another embodiment, the film-forming binder material is a thermoplastic polymer chosen from the group consisting of polyethylene (PE, LDPE, HDPE, LLDPE), polypropylene (PP), polystyrene (PS) and polyethylene terephthalate glycol (PETG).

In a preferred embodiment, the film-forming binder material is an actinic-radiation curable resin composition, preferably an actinic-radiation curable resin composition chosen from the group consisting of unsaturated polyesters, vinyl ether resins, epoxy resins, acrylic resins and methacrylic resins.

## *Spherical glass beads*

As defined hereinbefore, the retroreflective powder coating composition comprises spherical glass beads, wherein said spherical glass beads have a median particle diameter D50, as measured with laser diffraction, between 1 and 50 $\mu$m, and a refractive index, measured at a wavelength $\lambda$ of 589 nm, between 1.9 and 2.8.

In preferred embodiments, the term '*glass*' in '*spherical glass beads*' as used herein refers to non-crystalline, amorphous solid and transparent material made of oxides. In other embodiments, the term '*glass*' in '*spherical glass beads*' refers to solid and transparent material made of oxides and containing some microcrystallinity. The refractive index of the spherical glass beads is closely related to the density of the glass, although the relationship is not linear. Because of the nature of glass, the density is approximately an additive function of its composition. Densities of spherical glass beads having refractive indices between 1.5 and 2.8 typically vary between 2.5 and 4.5 g/cm$^3$.

In a preferred embodiment, the spherical glass beads have a refractive index, measured at a wavelength $\lambda$ of 589 nm, of between 2.0 and 2.6, preferably between 2.1 and 2.4. In another embodiment, the spherical glass beads as defined herein comprise at least two types of spherical glass beads.

Oxides that can be used in glass are oxides of silicon, boron, aluminium, sodium, barium, vanadium, titanium, lanthanum, strontium, zirconium, potassium, magnesium, iron, calcium, zinc, lithium, barium and lead. The spherical glass beads can for example comprise different combinations of silica ($SiO_2$), boric oxide ($B_2O_3$), phosphorous pentoxide ($P_2O_5$), vanadium pentoxide ($V_2O_5$), arsenic trioxide ($As_2O_3$), germanium oxide ($GeO_2$), calcium oxide (CaO), sodium oxide ($Na_2O$), magnesium oxide (MgO), zinc oxide (ZnO), aluminium oxide ($Al_2O_3$), potassium oxide ($K_2O$), iron oxide ($Fe_2O_3$), lead oxide (PbO), barium oxide (BaO), barium titanate ($BaTiO_3$), titanium oxide ($TiO_2$), lithium oxide ($Li_2O$), strontium oxide (SrO), lanthanum oxide ($La_2O_3$), and zirconium oxide ($ZrO_2$). Silica and boric oxide are generally the lowest in density. Glasses containing large weight percentages of these oxide therefore generally result in glass beads with low refractive indices. The refractive indices can be increased by adding oxides with higher molecular weights. Preferably, the spherical glass beads do not comprise PbO.

Glass beads having refractive indices in the range of 1.5 - 2.51 and their composition in terms of oxides are disclosed in WO2014/109564A1, which is incorporated herein by reference in its entirety. PbO-free transparent glass beads with refractive indices of above 2.15 are disclosed in US4,082,427, which is incorporated herein by reference in its entirety.

The spherical glass beads may be coloured spherical glass beads as long as they remain transparent. Both coloured spherical glass beads made from coloured transparent glass and spherical glass beads provided with a concentric transparent coloured coating are encompassed by the invention. The colour may be the natural colour caused by the composition of the oxides or may be deliberately chosen by adding ingredients having a specific colour. Coloured glass beads having high refractive indices and high transparency are disclosed in WO2014/109564A1.

The spherical glass beads have a median particle diameter D50, as measured with laser diffraction. Accordingly, the median particle diameter D50 is a volume median, based on a volume distribution. The median particle diameter D50 is the diameter where half of the population of spherical glass beads lies below. This volume median particle diameter is often referred to in the art as Dv50 or $D_{v0.5}$.

In a preferred embodiment, the spherical glass beads have a median particle diameter D50, as measured with laser diffraction, between 1.5 and 45 $\mu$m, more preferably between 2 and 40 $\mu$m, even more preferably between 3 and 35 $\mu$m, still more preferably between 4 and 30 $\mu$m, such as between 5 and 25 $\mu$m or between 6 and 20 $\mu$m.

In another embodiment, the spherical glass beads have a median particle diameter D50, as measured with laser diffraction, between 10 and 50 $\mu$m, such as between 15 and 50 $\mu$m, between 20 and 50 $\mu$m, between 25 and 50 $\mu$m, between 30 and 50 $\mu$m or between 35 and 50 $\mu$m.

In a very preferred embodiment, the spherical glass beads have a median particle diameter D50, as measured with laser diffraction, between 1 and 48 $\mu$m, such as between 1 and 45 $\mu$m, between 1 and 42 $\mu$m, between 1 and 40 $\mu$m, between 1 and 38 $\mu$m, between 1 and 35 $\mu$m, between 1 and 32 $\mu$m, between 1 and 30 $\mu$m, between 1 and 28 $\mu$m or between 1 and 25 $\mu$m.

In another embodiment, the spherical glass beads have a median particle diameter D50, as measured with laser diffraction, between 1 and 50 $\mu$m and a span between 0 and 1.9, preferably between 0 and 1.5, more preferably between 0 and 1, even more preferably between 0 and 0.5, such as between 0 and 0.2 or between 0 and 0.1.

In a preferred embodiment, the spherical glass beads have a median particle diameter D50, as measured with laser diffraction, between 1 and 40 $\mu$m and a span between 0 and 1.9, preferably between 0 and 1.5, more preferably between 0 and 1, even more preferably between 0 and 0.5, such as between 0 and 0.2 or between 0 and 0.1.

In another preferred embodiment, the spherical glass beads have a median particle diameter D50, as measured with laser diffraction, between 1 and 30 $\mu$m and a span between 0 and 1.9, preferably between 0 and 1.5, more preferably between 0 and 1, even more preferably between 0 and 0.5, such as between 0 and 0.2 or between 0 and 0.1.

In yet another preferred embodiment, the spherical glass beads have a median particle diameter D50, as measured with laser diffraction, between 1 and 20 $\mu$m and a span between 0 and 1.9, preferably between 0 and 1.5, more preferably between 0 and 1, even more preferably between 0 and 0.5, such as between 0 and 0.2 or between 0 and 0.1.

In still another preferred embodiment, the spherical glass beads have a median particle diameter D50, as measured with laser diffraction, between 1 and 15 $\mu$m and a span between 0 and 1.9, preferably between 0 and 1.5, more preferably between 0 and 1, even more preferably between 0 and 0.5, such as between 0 and 0.2 or between 0 and 0.1.

As will be appreciated by those skilled in the art, *span* = 0 corresponds to monodisperse spherical glass beads.

The spherical glass beads are not hemispherically coated with a light-reflective coating. Examples of a hemispherical light-reflective coating are hemispherical metal coatings, such as a hemispherical aluminium coating (HAC). The inventors have found that a hemispherical light-reflective coating has an adverse effect on retroreflectivity/LIDAR-detectability if the spherical glass beads do not protrude from the coating.

In a preferred embodiment, the spherical glass beads are not coated with a material which is repellent to the film-forming binder material. Spherical glass beads coated with a material repellent to the film-forming binder material result in flotation of the spherical glass beads, *i.e.* migration of the spherical glass beads to the outer surface. Hence, the wording *'coated with a material repellent to the film-forming binder material'* as used herein is considered interchangeable with *'coated with a material that result in flotation of the spherical glass beads'* or *'coated with a material that result in migration of the spherical glass beads to the outer surface'*. Such coatings are known in the art. As will be appreciated by those skilled in the art, whether the coating is repellent to the film-forming binder material depends on the type of film-forming binder material. It is within the skills of the artisan to exclude, based on flotation, certain coatings for a given film-forming binder material.

Examples of materials repellent to the film-forming binder material that are preferably excluded as coating on the spherical glass beads are:

- non-functional silanes, particularly $(C_6\text{-}C_{10})$alkyl or aryl di- or tri-alkoxysilanes, such as hexyltrimethoxysilane, isooctyltrimethoxysilane and phenyltrimethoxysilane;
- non-functional silicones, particularly a mixture of a methylhydrogensilicone for flotation and a silanol-containing compound to attach the silicone to the spherical glass beads, such as a mixture of a methylhydrogensilicone and sodium or potassium methyl siliconate or a mixture of a methylhydrogensilicone and a low molecular weight silanol-containing polymer;
- non-functional fluorochemical materials, such as a non-functional fluorochemical polymers.

In this context, the wording *'non-functional'* means *'not containing functional reactive groups'*.

In an embodiment, the spherical glass beads are coated with a material that improves adhesion with the film-forming binder material. Such coatings are known in the art. As will be appreciated by those skilled in the art, whether the coating improves adhesion with the film-forming binder material depends on the type of film-forming binder material. It is within the skills of the artisan to choose, based on thermo-mechanical characterization, preferred coatings for a given film-forming binder material. In this regard, reference is made to Gelest's brochure 'Silane Coupling Agents - Connecting Across Boundaries', 3rd edition., B. Arkles et al., 2014, Gelest, Inc., Morrisville, PA, which is herein incorporated by reference in its entirety. Further reference is made to Swarco's brochure 'The game-changing industry system SWARCOFORCE', SWARCO Advanced Industry Systems, Austria, May 2020, incorporated herein by reference in its entirety, disclosing adhesion-promoting silane coatings for many different thermoplastic and thermoset prepolymer compositions.

Typical examples of materials that generally improve adhesion with film-forming binder materials are:

- functional silanes, such as silanes having mercapto-, glycidoxy- or amino- functional groups;
- zirconates, titananates, zircoaluminates, alkyl phosphate esters;
- functional zirconate molecules, such as zirconate molecules having mercapto-, glycidoxy- or amino-functional groups;
- functional organosilanes, such as 3-aminopropyltriethoxysilane, 3-methacryloxypropyltrimethoxysilane, gamma-glycidoxypropyltrimethoxysilane, gamma-aminopropyltriethoxysilane and gamma-aminopropyltrimethoxysilane;
- functional titanate molecules, such as titanate molecules having mercapto-, glycidoxy- or amino-functional groups.

In an embodiment, the spherical glass beads are not coated.

In a preferred embodiment, the amount of the spherical glass beads is 5 - 83 wt.%, more preferably 6 - 80 wt.%, even more preferably 7 - 75 wt.%, such as 8 - 70 wt.%, 9 - 65 wt.% or 10 - 60 wt.%, based on the weight of the retroreflective powder coating composition.

In embodiments, the amount of the spherical glass beads is 4 - 82 wt.%, 4 - 78 wt.%, 4 - 74 wt.%, 4 - 70 wt.%, 4 - 66 wt.%, 4 - 62 wt.%, 4 - 58 wt.%, 4 - 54 wt.%, 4 - 52 or 4 - 50 wt.%, based on the weight of the retroreflective powder coating composition.

In another embodiment, the amount of the spherical glass beads is 5 - 85 wt.%, 6 - 85 wt.%, 8 - 85 wt.%, 10 - 85 wt.%, 12 - 85 wt.% or 14 - 85 wt.%, based on the weight of the retroreflective powder coating composition.

## *Pigment flakes*

The retroreflective powder coating composition comprises between 0.1 and 15 wt.% of pigment flakes chosen from the group consisting of metallic pigment flakes, pearlescent pigment flakes or a combination thereof, based on the weight of the retroreflective powder coating composition, said pigment flakes having a median diameter, as measured with laser diffraction, between 1 and 75 $\mu$m.

Metallic pigment flakes and pearlescent pigment flakes constitute the two main types of (flake-like) special effect pigments. Metallic pigment flakes, also called metal effect pigment flakes, consist of flake-shaped metallic particles, used to give products metallic effect, colour or functional properties like anti-corrosion, heat resistance and conductivity. The small metal platelets behave like mirrors and can reflect incident light. Pearlescent pigment flakes simulate the luster of natural pearls and give the materials additional colour effects, such as angular colour dependence. Pearlescent pigments typically have several layers of materials with different refractive indices. Thin flakes of materials with low refractive indices, such as mica, silica, alumina or glass, are typically used as substrates and they are coated with high refractive materials. Substrate-free pearlescent pigment flakes are however also encompassed by the invention.

In a preferred embodiment, the pearlescent pigment flakes have several layers of materials with different refractive indexes, wherein low refractive index material, such as mica, silica, alumina or glass, is used as substrate and wherein the substrate is coated with a material of a higher refractive index.

*Aspect ratio and thickness of the pigment flakes*

The terms *'flake'* or *'platelet'* as used herein refers to the shape of pigments having a large surface area and a small thickness. Typically, flakes or platelets are characterized by their *'aspect ratio',* being defined as the largest dimension, *i.e.* the largest diameter of the surface, divided by the smallest dimension, *i.e.* the thickness.

In a preferred embodiment, the pigment flakes as used herein have a thickness smaller than 1 $\mu$m and an aspect ratio (flake diameter/thickness) of at least 10.

In a preferred embodiment, the thickness of the pigment flakes is between 10 nm and 950 nm, more preferably between 15 nm and 850 nm, even more preferably between 50 nm and 650 nm.

In another preferred embodiment, the thickness of the pigment flakes is between 10 nm and 200 nm, such as between 10 nm and 150 nm, between 10 nm and 100 nm or between 10 and 50 nm.

In another preferred embodiment, the thickness of the pigment flakes is between 200 nm and 980 nm, such as between 300 nm and 980 nm, between 400 nm and 980 nm or between 500 nm and 980 nm.

The pigment flakes as used herein preferably have an aspect ratio of at least 12, preferably at least 15, more preferably at least 20, even more preferably at least 30.

In an embodiment, the pigment flakes as used herein have an aspect ratio of between 10 and 500, preferably between 15 and 250, more preferably between 20 and 100.

*Median diameter of the pigment flakes*

In a preferred embodiment, the median diameter of the pigment flakes is 1.5 - 65 $\mu$m, more preferably 2-50 $\mu$m, even more preferably 3-40 $\mu$m, such as 4 -35 $\mu$m, or 5 - 30 $\mu$m.

In another preferred embodiment, the median diameter of the pigment flakes is 1 - 65 $\mu$m, such as 1 - 50 $\mu$m, 1-40 $\mu$m, 1-35 $\mu$m, 1-25 $\mu$m, 1-20 $\mu$m, 1-15 $\mu$m or 1 - 13 $\mu$m.

In yet another preferred embodiment, the median diameter of the pigment flakes is 2 - 75 $\mu$m, such as 5 - 75 $\mu$m, 10 - 75 $\mu$m, 15 - 75 $\mu$m, 20 - 75 $\mu$m, 25 - 75 $\mu$m, 30 - 75 $\mu$m or 35 - 75 $\mu$m.

*Types of pigment flakes*

In a preferred embodiment, the pigment flakes as defined herein are chosen from (I), (II), (III) or a combination thereof:

(I) Metal flakes or mica flakes, optionally coated with at least one layer of one or more components chosen from the group consisting of metal oxides, metals, metal sulphides, titanium suboxides, titanium oxynitrides, FeO(OH), $SiO_2$, $B_2O_3$, $GeO_2$, $MgF_2$, metal alloys, rare earth compounds, and optionally coated with an outer layer comprising one or more colorants and a binder;

(II) Flakes comprising $Al_2O_3$, $SiO_2$, glass, ceramics, graphite or mica platelets coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder; and

(III) Flakes comprising $Al_2O_3$ platelets doped with one or more components chosen from the group consisting of $TiO_2$, $ZrO_2$, $SiO_2$, $SnO_2$, $In_2O_3$, ZnO and iron oxide, coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder.

In a preferred embodiment, the pigment flakes are synthetic pigment flakes. As will be appreciated by those skilled the art, the term *'synthetic'* in *'synthetic pigment flakes'* means that the pigment flakes are not pigment flakes naturally occurring, but they are pigment flakes that have been chemically manufactured or naturally occurring pigment flakes that have been chemically/physically processed to alter their properties. One of the advantages of using synthetic pigment flakes is that they can be produced with very smooth surfaces and high aspect ratios, thereby increasing their reflective properties.

Pigment flakes (I) can have zero to multiple coating layers, such as 1, 2, 3, 4 or 5 coating layers. In an embodiment, the metal in the metal pigment flakes (I) is chosen from the group consisting of aluminium, silver and gold, preferably aluminium. In an embodiment, metal pigment flakes (I) are aluminium flakes without any coating. In an embodiment, pigment flakes (I) are mica flakes without any coating. In an embodiment, pigment flakes (I) are mica flakes with several coating layers, such as mica flakes coated with $TiO_2$, $Fe_2O_3$ and $SnO_2$.

In an embodiment, metal pigment flakes (I) are aluminium pigment flakes coated with at least one layer of one or more components chosen from the group consisting of metal oxides, $SiO_2$, $B_2O_3$, and $GeO_2$. In an embodiment, metal pigment flakes (I) are aluminium flakes coated with an $SiO_2$ layer.

In an embodiment, flakes (I) are coated with a $SiO_2$ layer and with an outer layer comprising one or more colorants and a binder for fixation of the one or more colorants.

Examples of metal oxides that can be applied in a coating layer on metal pigment flakes (I) are chosen from the group consisting of $TiO_2$, $ZrO_2$, $SnO_2$, $ZnO$, $MnO_2$, $MgO$, $Ce_2O_3$, $Fe_2O_3$, $Fe_3O_4$, $FeTiOs$, $Cr_2O_3$, $CoO$, $CO_3O_4$, $VO_2$, $V_2O_3$, $NiO$ and combinations thereof.

Examples of suitable aluminium pigment flakes (I) coated with (i) a first layer consisting of $SiO_2$, $B_2O_3$, $MnO_2$, $MgO$, $GeO_2$ or $Al_2O_3$, (ii) a second $Fe_2O_3$ layer on top of the first layer and optionally (iii) a third layer of $TiO_2$, $ZrO_2$, or $A_2O_3$ on top of the second layer are disclosed in US2019/044679A1, which is incorporated herein by reference in its entirety.

Pigment flakes (II) and (III) can have one to multiple coating layers, such as 2, 3, 4 or 5 coating layers.

Examples of metal oxides that can be applied in a coating layer on metal pigment flakes (I) are chosen from the group consisting of $TiO_2$, $ZrO_2$, $SnO_2$, $ZnO$, $MnO_2$, $MgO$, $Ce_2O_3$, $Fe_2O_3$, $Fe_3O_4$, $FeTiOs$, $Cr_2O_3$, $CoO$, $CO_3O_4$, $VO_2$, $V_2O_3$, $NiO$ and combinations thereof.

In an embodiment, pigment flakes (II) comprise glass platelets, wherein the glass is borosilicate glass. In a very preferred embodiment, pigment flakes (II) comprise $Al_2O_3$ platelets.

In an embodiment, pigment flakes (II) or (III) are coated with one or more layers of metal oxide, such as with at least one layer of metal oxide chosen from the group consisting of $TiO_2$, $ZrO_2$, $SnO_2$, $ZnO$, $MnO_2$, $MgO$, $Ce_2O_3$, $Fe_2O_3$, $Fe_3O_4$, $FeTiOs$, $Cr_2O_3$, $CoO$, $CO_3O_4$, $VO_2$, $V_2O_3$, $NiO$ and combinations thereof. In preferred embodiments, pigment flakes (II) or (III) are coated with one or more layers of metal oxide chosen from the group consisting of $TiO_2$, $Fe_2O_3$, $Fe_3O_4$, $SnO_2$, $ZrO_2$, $Cr_2O_3$ and combinations thereof, such as coated with one layer of metal oxide chosen from the group consisting of $TiO_2$, $Fe_2O_3$ and a combination thereof.

Examples of pigment flakes (II) comprising $Al_2O_3$ platelets coated with different layers of metal oxide, $SiO_2$ and an organic dye as a top coat are disclosed in EP2799398B1, which is incorporated herein by reference in its entirety.

Examples of pigment flakes (II) comprising $Al_2O_3$ platelets coated with metal oxide chosen from the group consisting of $TiO_2$, $Fe_2O_3$ and a combination thereof, and their preparation are disclosed in US6267810B1, which is incorporated herein by reference in its entirety.

In another embodiment, pigment flakes (II) or (III) are coated with a layer of titanium suboxides ($Ti_nO_{2n-1}$, with n being an integer greater than 1, such as the oxides $TisOs$, $Ti_2O_3$), with a layer of titanium oxynitrides, with a layer of $FeO(OH)$, or with a thin semitransparent metal layer, for example comprising Al, Fe, Cr, Ag, Au, Pt or Pd, or combinations thereof.

In yet another embodiment, pigment flakes (II) or (III) are coated with a layer of a metal sulfide, such as coated with sulfides of tungsten, molybdenum, cerium, lanthanum or rare earth elements.

In another embodiment, pigment flakes (II) or (III) are coated with an outer layer of one or more colorants, for example Prussian Blue or Carmine Red, and a binder for fixation of the colorant.

As will be appreciated by those skilled in the art, these different layers can be combined, provided that the layer of one or more colorants and a binder is, if present, always an outer layer.

Examples of pigment flakes (III) comprising platelets of $Al_2O_3$ doped with titanium oxide and coated with metal oxide and their manufacture are disclosed in EP0763573B1, which is incorporated herein by reference in its entirety.

Examples of pigment flakes (III) comprising platelets of $Al_2O_3$ doped $TiO_2$, $ZrO_2$, $SiO_2$, $SnO_2$, $In_2O_3$ or $ZnO$ and coated with metal oxide are disclosed in EP2799398B1, which is incorporated herein by reference in its entirety.

*Ratio diameter pigment flakes to diameter spherical glass beads*

The inventors have found that retroreflection and LIDAR-detectability improves at higher ratios of the median diameter of the pigment flakes to the median particle diameter D50 of the spherical glass beads. Accordingly, the median diameter of the pigment flakes is greater than 35% of the median particle diameter D50 of the spherical glass beads.

In a preferred embodiment, the median diameter of the pigment flakes is greater than 38% of the median particle diameter D50 of the spherical glass beads, more preferably greater than 40%, such as greater than 45%, greater than 50%, greater than 55%, greater than 60%, greater than 70%, greater than 90%, greater than 110% or greater than 130%.

In another preferred embodiment, the median diameter of the pigment flakes is between greater than 35 and 400% of the median particle diameter D50 of the spherical glass beads, more preferably between 40 and 400%, such as between 45 and 400%, between 50 and 400%, between 55 and 400%, between 60 and 400%, between 70 and 400%, between 90 and 400%, between 110 and 400% or between 130 and 400%.

In yet another embodiment, the median diameter of the pigment flakes is between greater than 35 and 350% of the median particle diameter D50 of the spherical glass beads, more preferably between greater than 35 and 300%, such as between greater than 35 and 250%, between greater than 35 and 225%, between greater than 35 and 200%, between greater than 35 and 175%, between greater than 35 and 150%, between greater than 35 and 125%, between greater than 35 and 100% or between greater than 35 and 75%.

*Amount of pigment flakes*

In a preferred embodiment, the amount of said pigment flakes is 0.15 - 13 wt.%, based on the weight of the retroreflective powder coating composition, such as 0.3 - 10 wt.%, 0.5 - 7.5 wt.%, 0.8 - 7 wt.%, 0.9 - 6.5 wt.% or 1 - 6 wt.%.
In an embodiment, the amount of said pigment flakes is 0.1 - 14 wt.%, based on the weight of the retroreflective powder coating composition, such as 0.1 - 12 wt.%, 0.1 - 10 wt.%, 0.1 - 8 wt.%, 0.1 - 5 wt.% or 0.1 - 4 wt.%.
In another embodiment, the amount of said pigment flakes is 0.2 - 15 wt.%, based on the weight of the retroreflective powder coating composition, such as 0.5 - 15 wt.%, 1 - 15 wt.%, 2 - 15 wt.%, 3-15 wt.% or 4 - 15 wt.%.
The amount of said pigment flakes is preferably 1 part by weight to between 1 and 80 part by weight of the spherical glass beads, preferably 1 part by weight to between 1 and 40 part by weight of the spherical glass beads, more preferably 1 part by weight to between 1 and 30 part by weight of the spherical glass beads.

**Further ingredients**

As defined hereinbefore, the retroreflective powder coating composition comprises 0 - 15 wt.% of one or more further ingredients, based on the weight of the retroreflective powder coating composition. As will be appreciated by the skilled person, the *'further'* ingredients are different from the other ingredients defined in the retroreflective powder coating composition. In other words, the one or more further ingredients do not comprise said film-forming binder material, said spherical glass beads and said pigment flakes.
In a preferred embodiment, the one or more further ingredients do not comprise one or more of:

- spherical glass beads that are hemispherically coated with a light-reflective coating;
- spherical glass beads with a refractive index, measured at a wavelength of 589 nm, of 1.93 or lower; and
- spherical glass beads that are coated with a material which is repellent to the film-forming binder material.

The one or more further ingredients can encompass any additive that is typically used in powder coating compositions. In an embodiment, the one or more further ingredients are chosen from the group consisting of rheology modifiers, flow control agents, degassing agents, luminescent agents, antioxidants, UV-absorbers and stabilizers, plasticizers, abrasion resistant particles, surfactants, reinforcement fibers, preservatives, dyes, curing initiators, catalysts, reaction inhibitors, corrosion inhibitors, organic pigments, inorganic pigments other than the metallic pigment flakes and pearlescent pigment flakes, and combinations thereof. Examples of reinforcement fibres are glass, carbon, aramid and basalt fibres.
In an embodiment, the amount of the one or more further ingredients is 0.01 - 15 wt.%, 0.02 - 13 wt.%, 0.05 - 11 wt.%, 0.1 - 10 wt.%, 0.2 - 9 wt.%, 0.25 - 8 wt.%, 0.30 - 7 wt.% or 0.35 - 6 wt.%, based on the weight of the retroreflective powder coating composition.
In another embodiment, the amount of the one or more further ingredients is 0 - 14 wt.%, 0 - 13 wt.%, 0 - 12 wt.%, 0 - 11 wt.%, 0 - 10 wt.%, 0 - 9 wt.%, 0 - 8 wt.% or 0 - 7 wt.%, based on the weight of the retroreflective powder coating composition.
In yet another embodiment, the amount of the one or more further ingredients is 0.02 - 15 wt.%, 0.05 - 15 wt.%, 0.1 - 15 wt.%, 0.2 - 15 wt.%, 0.25 - 15 wt.%, 0.30 - 15 wt.% or 0.35 - 15 wt.%, based on the weight of the retroreflective powder coating composition.

**Process for the production of a retroreflective powder coating composition**

In a further aspect, the invention concerns a process for the production of a retroreflective powder coating composition according to the first aspect.
As will be appreciated by those skilled in the art, the process for the production of the retroreflective powder coating composition typically depends on the type of ingredients (e.g. thermoplastic polymer versus thermoset prepolymer composition) that are used and on the physical appearance of the product.
There are many production routes possible. The following examples are considered to be non-limiting.
In a first embodiment, the process for the production of the retroreflective powder coating composition comprises the steps of:

(a) providing particles comprising the film-forming binder material and having a median particle diameter D50, as measured with laser diffraction, between 2 and 200 $\mu$m, wherein these particles optionally comprise at least part of the one or more further ingredients as defined in the first aspect;

(b) providing the pigment flakes, spherical glass beads and optionally at least part of the one or more further ingredients as defined in the first aspect; and

(c) dry blending the ingredients of (a) and (b) under mixing conditions.

Particles comprising the film-forming binder material and having a median particle diameter D50, as measured with laser diffraction, between 2 and 200 $\mu$m, wherein these particles comprise at least part of the one or more further ingredients as defined in the first aspect can for example be produced by dry blending the film-forming binder material and at least part of the one or more further ingredients, subjecting the resulting dry blend to extrusion at elevated temperature, cooling the molten product, chipping the product after solidification, fine grinding the chipped product, optionally followed by a classification step.

As will be appreciated by those skilled in the art, further ingredients like rheology modifiers, flow control agents, degassing agents, luminescent agents, antioxidants, UV-absorbers and stabilizers, plasticizers, surfactants, preservatives, dyes, curing initiators, polymerization catalysts, reaction inhibitors and corrosion inhibitors preferably need to be distributed homogeneously across the particles comprising the film-forming binder material provided in step (a). Hence, if present in the retroreflective powder coating composition, these one or more further ingredients are preferably comprised in the particles comprising the film-forming binder material. Further ingredients like abrasion resistant particles, reinforcement fibers, organic pigments and inorganic pigments other than the metallic pigment flakes and pearlescent pigment flakes can be added in step (b).

In a preferred embodiment, step (c) comprises a step of slightly heating the ingredients to soften the particles comprising the film-forming binder material such that the pigment flakes, spherical glass beads and optionally at least part of the one or more further ingredients as defined in the first aspect stick or adhere to the particles comprising the film-forming binder material, followed by cooling. In the art of powder coating, this process is called bonding. In order to ensure that the resulting bonded retroreflective powder coating composition has the preferred particle size, step (a) is preferably started with smaller particles comprising the film-forming binder material, such as for example particles comprising the film-forming binder material having a median particle diameter D50, as measured with laser diffraction, between 2 and 150 $\mu$m such as between 2 and 100 $\mu$m.

In a second embodiment, the process for the production of the retroreflective powder coating composition comprises the steps of:

(a) providing particles comprising the film-forming binder material and having a median particle diameter D50, as measured with laser diffraction, between 2 and 200 $\mu$m, wherein these particles comprise the pigment flakes and the optional one or more further ingredients as defined in the first aspect;

(b) providing the spherical glass beads as defined in the first aspect; and

(c) dry blending the ingredients of (a) and (b) under mixing conditions.

Particles comprising the film-forming binder material and having a median particle diameter D50, as measured with laser diffraction, between 2 and 200 $\mu$m, wherein these particles further comprise the pigment flakes and the optional one or more further ingredients as defined in the first aspect can for example be produced by dry blending the film-forming binder material, the pigment flakes and the optional one or more further ingredients, subjecting the resulting blend to extrusion at elevated temperature, cooling the molten product, chipping the product after solidification, fine grinding the chipped product, optionally followed by a classification step.

As will be appreciated by those skilled in the art, the spherical glass beads as defined in the first aspect can also be comprised/incorporated in the particles comprising the film-forming binder material in a similar way. Many variations are possible that are all considered to be encompassed by the invention.

**Powder coating process**

In a second aspect, the invention concerns a powder coating process for providing a substrate with retroreflective properties, said process comprising the steps of:

(a) providing a retroreflective powder coating composition according to the first aspect and a substrate;

(b) applying the retroreflective powder coating composition onto the substrate;

(c) fixing the retroreflective powder coating composition onto the substrate to provide a retroreflective layer; and

(d) optionally applying a clearcoat top layer or a tinted clearcoat top layer onto the retroreflective layer obtained in step (c).

### Substrate

In an embodiment, the substrate to be coated is chosen from the group consisting of textiles, leather, metals, stone, concrete, wood, veneer, wood composite, fiberboard, cement, stone, glass, ceramics, paper, cardboard, rubber, plastics, carbon fibers and combinations thereof, preferably from metals and plastics, most preferably from metals. Metal substrates include, but are not limited to, tin, steel, cold rolled steel, hot rolled steel, steel coated with zinc metal, zinc compounds, zinc alloys, electro-galvanized steel, hot-dipped galvanized steel, galvanealed steel, galvalume, steel plated with zinc alloy, stainless steel, zinc-aluminum-magnesium alloy coated steel, zinc-aluminum alloys, aluminum, aluminum alloys, aluminum plated steel, aluminum alloy plated steel, steel coated with a zinc-aluminum alloy, magnesium, magnesium alloys, nickel, nickel plating, bronze, tinplate, clad, titanium, brass, copper, silver, gold, alloys thereof, and combinations thereof.

The substrate may need to be pretreated before applying the retroreflective powder coating composition onto it to ensure that the powder coating will adhere to the substrate. In general, the substrate may be subjected to cleaning pretreatment before applying the retroreflective powder coating composition onto it. Cleaning may include the removal of dirt, oil and lubrication greases and for metal substrates for example also metal oxides and welding scale. The substrate or cleaned substrate may further be chemically or physically pretreated to improve adhesion between the substrate and the retroreflective powder coating composition. Examples of such pretreatment steps include plasma treatment, etching, applying a primer layer onto the substrate, abrasive blasting, sand blasting, shot blasting, air blasting, wire brushing, conversion coating and combinations thereof. As will be appreciated by those skilled in the art, the steps of cleaning and improving adhesion may be combined.

The substrate preferably is the outer surface of an object that needs to be easily seen under conditions of reduced visibility, such as nighttime conditions and/or inclement weather conditions. Examples of such objects are (parts of) vehicles, traffic signs and road markings including guardrails. Vehicles include, but are not limited to, cars, lorries, trucks, bikes, mopeds, scooters, motorcycles, trains, trams, boats, ships, drones, skateboards, missiles, helicopters and aircrafts.

### Applying the retroreflective powder coating composition onto the substrate

Step (b) of applying the retroreflective powder coating composition onto the substrate can be performed with any technique known in the art of powder coating.

In an embodiment, the retroreflective powder coating composition is applied to the substrate using electrostatic coating. In electrostatic coating, the particles of the retroreflective powder coating composition are provided with a charge (negative or positive) and the charged particles are then applied onto the substrate which is either grounded or is provided with the opposite charge, e.g. using spraying or with electrostatic discs.

The substrate to be coated may be heated before applying the retroreflective powder coating composition.

In another embodiment, the substrate is heated and is then dipped into a fluidized bed of the retroreflective powder coating composition. The retroreflective powder coating composition then sticks to the hot substrate and forms a film layer onto the substrate. If the film-forming binder material is a thermoset prepolymer composition, further heating, in step (c), is typically required to finish cure the coating layer.

In yet another embodiment, the retroreflective powder coating composition is applied to the substrate using electrostatic fluidized bed coating.

In still another embodiment, the retroreflective powder coating composition is applied to the substrate using electrostatic magnetic brush coating.

### Fixing the retroreflective powder coating composition onto the substrate

As will be appreciated by those skilled in the art, the nature of step (c) of fixing the retroreflective powder coating composition onto the substrate depends on the film-forming binder material chosen.

In case of electrostatic coating, the substrate with the powder thereon obtained in step (b) is heated causing the film-forming binder material to melt and form a film layer on the substrate. If the film-forming binder material is a thermoplastic polymer, the substrate with the film layer thereon is subsequently cooled to provide a hard coating with retroreflective properties. If the film-forming binder material is a thermoset prepolymer composition, sufficient heating of the substrate with the film layer thereon already causes curing resulting in a hard coating with retroreflective properties without the need to actively cool the coating layer. If the film-forming binder material is an actinic-radiation curable resin composition, the step of heating and film formation is followed by subjecting the film layer to actinic radiation which causes curing, resulting in a hard coating with retroreflective properties. The actinic radiation includes, but is not limited to, visible light, ultraviolet (UV) radiation, infrared radiation, X-ray, and gamma radiation. Preferably, the actinic radiation is UV radiation. If the film-forming binder material is a combination of one or more of the aforementioned materials, a combination of sufficient heating, applying actinic radiation and active cooling may be required.

If the film-forming binder material is a thermoset prepolymer composition, steps (b) and (c) can be combined by applying the retroreflective powder coating composition onto a heated substrate. If the film-forming binder material is a thermoset prepolymer composition, it is however also possible to apply the retroreflective powder coating composition onto a heated substrate in step (b) causing the formation of film layer followed by further heating in step (c) to finish cure the layer.

In an embodiment, heating is performed using a convection oven, an infrared oven or using a laser.

Steps (b) and (c) can comprise applying and fixing a single layer in one step or multiple layers on top of each other in subsequent steps. Steps (b) and (c) can further comprise applying and fixing multiple layers of different retroreflective powder coating compositions on top of each other in subsequent steps.

In a preferred embodiment, the retroreflective layer applied onto the substrate has a thickness of between 5 and 1000 $\mu$m, more preferably between 10 and 500 $\mu$m, even more preferably between 15 and 300 $\mu$m, such as between 20 and 150 $\mu$m, between 25 and 100 $\mu$m or between 30 and 60 $\mu$m.

In another preferred embodiment, the retroreflective layer applied onto the substrate has a thickness of between 10 and 1000 $\mu$m, such as between 20 and 1000 $\mu$m, between 50 and 1000 $\mu$m, between 100 and 1000 $\mu$m, between 150 and 1000 $\mu$m or between 200 and 1000 $\mu$m.

In yet another preferred embodiment, the retroreflective layer applied onto the substrate has a thickness of between 5 and 500 $\mu$m, such as between 5 and 300 $\mu$m, between 5 and 150 $\mu$m, between 5 and 100 $\mu$m, between 5 and 50 $\mu$m or between 5 and 40 $\mu$m.

### *Applying a clearcoat top layer or a tinted clearcoat top layer*

In an optional but preferred step, a clearcoat top layer or a tinted clearcoat top layer is applied onto the retroreflective layer obtained in step (c).

The term *'clearcoat top layer'* is well known in the art of coatings and concerns a transparent layer, typically without dyes and pigments, that covers a (coloured) basecoat layer. Clearcoat top layers are applied for different purposes, such as the prevention of oxidation or weathering of the basecoat layer and/or to provide the overall coating with a glossy appearance. In a preferred embodiment, the clearcoat top layer does not comprise dyes and pigments. In a preferred embodiment, the clearcoat top layer does not comprise spherical glass beads. The term *'tinted clear coat layer'* refers to a coloured clearcoat composition, which is transparent and which typically comprises dyes, nanoscale pigments and/or pigment flakes. In a preferred embodiment, the tinted clearcoat layer does not comprise spherical glass beads.

Step (d) of applying a clearcoat top layer or a tinted clearcoat top layer can comprise applying a single layer in one step or multiple layers on top of each other in subsequent steps.

Generally, the types of clearcoat compositions suitable for application in the coating include solvent-based and aqueous clearcoat compositions, powder and powder slurry clearcoat compositions, and thermosetting and thermoplastic clearcoat compositions. The clearcoat composition can be radiation curable. If the clearcoat composition is radiation curable, it can comprise a curing initiator, such as a photoinitiator or a thermal initiator.

### Coated substrate

In a third aspect, the invention concerns a substrate coated with a retroreflective layer obtained by or obtainable by the process according to the second aspect.

The coated substrate according to the third aspect can at least be distinguished from coatings obtained by or obtainable by the processes described in US6,623,793B2 and in WO2021/216518A1 based on:

- the presence of the pigment flakes, wherein the median diameter of said pigment flakes is greater than 35% of the median particle diameter D50 of said spherical glass beads; and
- the more or less homogeneous distribution of the spherical glass beads across the coating layer, whereas at least part of the spherical glass beads in US6,623,793B2 and in WO2021/216518A1 are *'floating'* on the polymeric layer.

Without wishing to be bound by any theory, the inventors hypothesize that the coated substrate according to the third aspect can at least be distinguished from coatings obtained by or obtainable by organic-solvent-based processes or water-based processes, such as disclosed in WO2022/243231A1, by the relative configuration of pigment flakes and spherical glass beads. As is described in for example US3,228,897, during drying of organic-solvent-based compositions or water-based compositions, while the composition is still fluid, pigment flakes which initially overlie the spherical glass beads slide off the front of the hemispherical surfaces of the beads and move into a position to face towards the back hemispherical surfaces of the beads. Such movement is not or hardly possible in the molten state of the retroreflective powder coating composition according to the first aspect, meaning that the relative configuration of pigment flakes and spherical glass beads in the coated substrate according to the third aspect is more random.

Thus, the invention has been described by reference to certain embodiments discussed above. It will be recognized that these embodiments are susceptible to various modifications and alternative forms well known to those of skill in the art.

Furthermore, for a proper understanding of this document and its claims, it is to be understood that the verb *'to comprise'* and its conjugations are used in its non-limiting sense to mean that items following the word are included, but items not specifically mentioned are not excluded. In addition, reference to an element by the indefinite article *'a'* or *'an'* does not exclude the possibility that more than one of the element is present, unless the context clearly requires that there be one and only one of the elements. The indefinite article *'a'* or *'an'* thus usually means *'at least one'*.

## EXAMPLES

### *Materials*

### *Spherical glass beads*

- Micro glass beads (C), obtained from Jianxi Sunflex Light Retroreflective Material Co, Ltd., China, having a refractive index of about 2.2, measured at a wavelength $\lambda$ of 589 nm, having a median particle diameter D50 of about 40.37 $\mu$m, a D10 diameter of 37.32 $\mu$m and a D90 diameter of 44.11 $\mu$m, as measured with laser diffraction, no HAC coating.
- Micro glass beads (CS), obtained from Jianxi Sunflex Light Retroreflective Material Co, Ltd., China, having a refractive index of about 2.2, measured at a wavelength $\lambda$ of 589 nm, having a median particle diameter D50 of about 27.49 $\mu$m, a D10 diameter of 20.64 $\mu$m and a D90 diameter of 33.24 $\mu$m, as measured with laser diffraction, no HAC coating.
- HAC-coated micro glass beads (NSX), obtained from Jianxi Sunflex Light Retroreflective Material Co, Ltd., China, having a refractive index of about 1.9, measured at a wavelength $\lambda$ of 589 nm, having a median particle diameter D50 of 26.13 $\mu$m, a D10 diameter of 19.51 $\mu$m and a D90 diameter of 31.41 $\mu$m, as measured with laser diffraction.

### *Film-forming binder material*

- ENVIROCRON® PCS Polyester TGIC-free Series "4", thermoset prepolymer composition from PPG, having a median particle diameter D50 between 30 and 50 $\mu$m.

### *Pigment flakes*

- Zenexo® GoldenShine 21 YY, obtained from Schlenk Metallic Pigments GmbH, $D_{50}$ diameter of 21 $\mu$m.

### *Example 1: preparation of retroreflective powder coating compositions and powder coating process*

Two retroreflective powder coating compositions were prepared by dry blending the ingredients listed in Table 1. The median diameter of the pigment flakes was >> 35% of the median particle diameter D50 of the spherical glass beads.

Table 1

| Ingredient | Name | Comp. 1 [g] / [wt. %] | Comp. 2 [g] / [wt. %] |
|---|---|---|---|
| Film-forming binder material | ENVIROCRON® PCS Polyester TGIC-free Series "4" | 25.0/ 19.9 | 25.0 / 19.9 |
| Spherical glass beads | Micro glass beads (CS) | 100.0 / 79.7 | |
| | Micro glass beads (C) | | 100.0 / 79.7 |
| Pigment flakes | Zenexo® Golden Shine 21 YY | 0.5 / 0.4 | 0.5 / 0.4 |

Both compositions were applied to planar metal test plates (10.5 x 14.9 cm) having a vertical black bar (0.3 cm width) across the surface using electrostatic coating (COLO-800D-TH powder spray set up including a COLO-800DT-B Spray Gun) and the resulting coating layers (thickness of 60 - 70 $\mu$m) were subsequently cured at increased temperature. The spherical glass beads did not or hardly protrude from the coating layer.

The general (off centre) retroreflection of the cured coatings was visually inspected and assessed by directing the beam of a torch under an angle of 30° with the axis perpendicular to the main surface of the coatings, wherein the sightline of the eyes substantially coincides with the beam of the torch, and by visually determining whether or not and to which extent retroreflection was observed. The retroreflection of the surfaces of the coatings according to the invention was considered good.

LIDAR-detectability was determined by scanning the surface of the coatings with a Livox Tele-15 LIDAR-device (Livox Technology Company Co., Ltd) at a wavelength of 905 nm under an angle of about 30° with the axis perpendicular to the main surface. Scanning took place under daylight conditions. The Tele-15 LIDAR device was placed at a distance of about 20 meters from the main surface of the coatings. LIDAR-detectability of the surfaces of the coatings according to the invention was considered good.

### Example 2: powder coatings with a clearcoat top layer

The powder coated substrates obtained in Example 1 were provided with a clearcoat top layer (2K) and the general (off centre) retroreflection and LIDAR-detectability of the surfaces were determined again. It was concluded that the application of the clearcoat top layer hardly influenced the retroreflection and LIDAR-detectability, which were both still considered good.

### Comparative Example 3: preparation of retroreflective powder coating compositions and powder coating process

Example 1 was repeated by replacing 20 % of the weight of the spherical glass beads (CS or C) with HAC-coated micro glass beads (NSX). The spherical glass beads did again not or hardly protrude from the coating layer. The general (off centre) retroreflection and LIDAR-detectability of the surfaces were determined again. It was concluded that the use of HAC-coated spherical glass beads has an adverse effect on both retroreflection and LIDAR-detectability.

### Claims

1. Retroreflective powder coating composition consisting of:

   • 10 - 95.9 wt.% of a film-forming binder material chosen from the group consisting of thermoplastic polymers, thermoset prepolymer compositions, actinic-radiation curable resin compositions and combinations thereof;
   • 4 - 85 wt.% of spherical glass beads, wherein said spherical glass beads have a median particle diameter D50, as measured with laser diffraction, between 1 and 50 $\mu$m, and a refractive index, measured at a wavelength $\lambda$ of 589 nm, between 1.9 and 2.8, wherein the spherical glass beads are not hemispherically coated with a light-reflective coating;
   • 0.1 - 15 wt.% of pigment flakes chosen from the group consisting of metallic pigment flakes, pearlescent pigment flakes or a combination thereof, said pigment flakes having a median diameter, as measured with laser diffraction, between 1 and 75 $\mu$m, wherein said pigment flakes preferably have a thickness smaller than 1 $\mu$m and an aspect ratio (flake diameter/thickness) of at least 10; and
   • 0 - 15 wt.% of one or more further ingredients,
   wherein the weight percentages are based on the total weight of the composition, wherein the composition comprises particles comprising the film-forming binder material and having a median particle diameter D50, as measured with laser diffraction, between 2 and 200 $\mu$m, and
   wherein the median diameter of said pigment flakes is greater than 35% of the median particle diameter D50 of said spherical glass beads.

2. Retroreflective powder coating composition according to claim 1, wherein the particles comprising the film-forming binder further comprise at least part of the one or more further ingredients, such as at least 50 wt.%, at least 80 wt.% or 100 wt.% of the one or more further ingredients, based on the total weight of the one or more further ingredients in the retroreflective powder coating composition, wherein the particles comprising the film-forming binder preferably do not comprise the spherical glass beads and the pigment flakes.

3. Retroreflective powder coating composition according to claim 1, wherein the particles comprising the film-forming binder further comprise the pigment flakes and at least part of the one or more further ingredients, such as at least 50 wt.%, at least 80 wt.% or 100 wt.% of the one or more further ingredients, based on the total weight of the one or more further ingredients in the retroreflective powder coating composition, wherein the particles comprising the film-forming binder preferably do not comprise the spherical glass beads.

4. Retroreflective powder coating composition according to claim 1, wherein the particles comprising the film-forming binder further comprise the pigment flakes, the spherical glass beads and at least part of the one or more further ingredients, such as at least 50 wt.%, at least 80 wt.% or 100 wt.% of the one or more further ingredients, based on the total weight of the one or more further ingredients in the retroreflective powder coating composition.

5. Retroreflective powder coating composition according to any one of claims 1 to 4, wherein the median diameter of said pigment flakes is greater than 38% of the median particle diameter D50 of said spherical glass beads, preferably greater than 40%, such as greater than 45%, greater than 50%, greater than 55%, greater than 60%, greater than 70%, greater than 90%, greater than 110% or greater than 130%.

6. Retroreflective powder coating composition according to any one of claims 1 to 5, wherein the amount of the pigment flakes is 1 part by weight to between 1 and 80 part by weight of the spherical glass beads, preferably 1 part by weight to between 1 and 40 part by weight of the spherical glass beads, more preferably 1 part by weight to between 1 and 30 part by weight of the spherical glass beads.

7. Retroreflective powder coating composition according to any one of claims 1 to 6, wherein the one or more further ingredients do not comprise one or more of:

   • spherical glass beads that are hemispherically coated with a light-reflective coating;
   • spherical glass beads with a refractive index, measured at a wavelength of 589 nm, of 1.93 or lower; and
   • spherical glass beads that are coated with a material which is repellent to the film-forming binder material.

8. Retroreflective powder coating composition according to any one of claims 1 to 7, wherein the one or more further ingredients are chosen from the group consisting of rheology modifiers, flow control agents, degassing agents, luminescent agents, antioxidants, UV-absorbers and stabilizers, plasticizers, abrasion resistant particles, surfactants, reinforcement fibers, preservatives, dyes, curing initiators, catalysts, reaction inhibitors, corrosion inhibitors, organic pigments, inorganic pigments other than the metallic pigment flakes and pearlescent pigment flakes, and combinations thereof.

9. Retroreflective powder coating composition according to any one of claims 1 to 8, wherein the metallic pigment flakes and pearlescent pigment flakes are chosen from the group consisting of:

   (I) Metal pigment flakes or mica pigment flakes, optionally coated with at least one layer of one or more components chosen from the group consisting of metal oxides, metals, metal sulphides, titanium suboxides, titanium oxynitrides, FeO(OH), $SiO_2$, $B_2O_3$, $GeO_2$, $MgF_2$, metal alloys, rare earth compounds, and optionally coated with an outer layer comprising one or more colorants and a binder;
   (II) Pigment flakes comprising $Al_2O_3$, $SiO_2$, glass, ceramic, graphite or mica platelets coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder;
   (III) Pigment flakes comprising $Al_2O_3$ platelets doped with one or more components chosen from the group consisting of $TiO_2$, $ZrO_2$, $SiO_2$, $SnO_2$, $In_2O_3$, ZnO and iron oxide, coated with at least one layer of one or more components chosen from the group consisting of metal oxides, metals, metal sulphides, titanium suboxides, titanium oxynitrides, FeO(OH), $SiO_2$, $B_2O_3$, $GeO_2$, metal alloys, rare earth compounds, and optionally coated with an outer layer comprising one or more colorants and a binder.

10. Retroreflective powder coating composition according to any one of claims 1 to 9, wherein said spherical glass beads have a refractive index, measured at a wavelength $\lambda$ of 589 nm, between 2.0 and 2.6, preferably between 2.1 and 2.4.

11. Retroreflective powder coating composition according to any one of claims 1 to 10, wherein the film-forming binder material is a thermoplastic polymer chosen from the group consisting of homopolymers and copolymers of polyethylene (PE, LDPE, HDPE, LLDPE), polypropylene (PP), polyvinylchloride (PVC), polystyrene (PS), polymethylmethacrylate (PMMA), polyamide (PA), polyoxymethylene (POM), polycarbonate (PC), polyethylene terephthalate (PET), polyethylene terephthalate glycol (PETG), polysulfone (PSU), polyimide (PI), polybutene (PB), polyether ether ketone (PEEK), poly(acrylonitrile butadiene styrene) (ABS), poly(acrylonitrile butadiene acrylate) (ABA), poly(acrylic styrene acrylonitrile) (ASA), poly(lactic acid) (PLA), nylon and blends thereof.

12. Retroreflective powder coating composition according to any one of claims 1 to 10, wherein the film-forming binder material is a thermoset prepolymer composition chosen from the group consisting of phenol formaldehydes, urea formaldehydes, melamine formaldehydes, epoxies, polyurethanes, unsaturated polyesters, polyesters, acrylics, acrylated acrylics and hybrid polyester resin/epoxy resin systems.

13. Retroreflective powder coating composition according to any one of claims 1 to 10, wherein the film-forming binder material is an actinic-radiation curable resin composition chosen from the group consisting of unsaturated polyesters, vinyl ether resins, epoxy resins, acrylic resins and methacrylic resins.

14. Powder coating process for providing a substrate with retroreflective properties, said process comprising the steps of:

(a) providing a retroreflective powder coating composition according to any one of claims 1 to 13 and a substrate;
(b) applying the retroreflective powder coating composition onto the substrate;
(c) fixing the retroreflective powder coating composition onto the substrate to provide a retroreflective layer; and
(d) optionally applying a clearcoat top layer or a tinted clearcoat top layer onto the retroreflective layer obtained in step (c).

15. Substrate coated with a retroreflective layer obtainable by the process according to claim 14.

Europäisches
Patentamt

European
Patent Office

Office européen
des brevets

# EUROPEAN SEARCH REPORT

**Application Number**

EP 23 17 0899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2001 081407 A (NIPPON PAINT CO LTD; CHUO MOTOR WHEEL CO LTD) 27 March 2001 (2001-03-27) * claims; par. 21 – 27 + 37-42 + 83-87 * | 1-15 | INV. C09D5/00 C08K3/40 C09D7/61 C09D7/40 C09D17/00 C08K7/20 C09D5/03 |
| A,D | WO 2022/243231 A1 (INK INVENT IP B V [NL]) 24 November 2022 (2022-11-24) * claims; examples * | 1-15 | |
| A | US 2021/371681 A1 (OMURA MASAHIRO [JP] ET AL) 2 December 2021 (2021-12-02) * the whole document * | 1-15 | |
| A | WO 2022/243230 A1 (INK INVENT IP B V [NL]) 24 November 2022 (2022-11-24) * claims; examples * | 1-15 | |
| A | US 3 251 704 A (NELLESSEN ALFRED H) 17 May 1966 (1966-05-17) * claims 1+17-18 * | 1-15 | |

**TECHNICAL FIELDS SEARCHED (IPC)**

C09D
C08K

The present search report has been drawn up for all claims

| Place of search | Date of completion of the search | Examiner |
|---|---|---|
| Munich | 7 November 2023 | von Zitzewitz, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0899

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | | Publication date | Patent family member(s) | | Publication date |
|---|---|---|---|---|---|
| JP 2001081407 | A | 27-03-2001 | NONE | | |
| WO 2022243231 | A1 | 24-11-2022 | TW | 202302484 A | 16-01-2023 |
| | | | WO | 2022243231 A1 | 24-11-2022 |
| US 2021371681 | A1 | 02-12-2021 | CA | 3087167 A1 | 04-07-2019 |
| | | | CN | 111511855 A | 07-08-2020 |
| | | | EP | 3733802 A1 | 04-11-2020 |
| | | | JP | 6533863 B1 | 19-06-2019 |
| | | | JP | 2019119884 A | 22-07-2019 |
| | | | US | 2021371681 A1 | 02-12-2021 |
| | | | WO | 2019131957 A1 | 04-07-2019 |
| WO 2022243230 | A1 | 24-11-2022 | TW | 202307148 A | 16-02-2023 |
| | | | WO | 2022243230 A1 | 24-11-2022 |
| US 3251704 | A | 17-05-1966 | DE | 1519232 A1 | 29-10-1970 |
| | | | GB | 1009603 A | 10-11-1965 |
| | | | SE | 321300 B | 02-03-1970 |
| | | | US | 3251704 A | 17-05-1966 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022243231 A1
- US 6623793 B2
- WO 2021216518 A1
- WO 2014109564 A1
- US 4082427 A
- US 2019044679 A1
- EP 2799398 B1
- US 6267810 B1
- EP 0763573 B1
- US 3228897 A

**Non-patent literature cited in the description**

- **B. ARKLES et al.** Silane Coupling Agents - Connecting Across Boundaries. Gelest, Inc, 2014
- The game-changing industry system SWARCOFORCE. SWARCO Advanced Industry Systems, May 2020